Europäisches Patentamt

European Patent Office

Office européen des brevets

(11) Veröffentlichungsnummer: **0 330 082**
**A2**

(19)

(12) **EUROPÄISCHE PATENTANMELDUNG**

(21) Anmeldenummer: **89102721.1**

(51) Int. Cl.⁴: **H02G 3/04**

(22) Anmeldetag: **17.02.89**

(30) Priorität: **20.02.88 DE 3805330**

(43) Veröffentlichungstag der Anmeldung:
**30.08.89 Patentblatt 89/35**

(84) Benannte Vertragsstaaten:
**AT BE CH DE ES FR GB IT LI NL SE**

(71) Anmelder: **ZIPPER-TECHNIK GMBH**
**Wernher-von-Braun-Strasse 3**
**D-6078 Neu-Isenburg(DE)**

(72) Erfinder: **Luedtke, Siegfried**
**Arnulfstrasse 142**
**D-8000 München 19(DE)**

(74) Vertreter: **Selting, Günther, Dipl.-Ing. et al**
**Patentanwälte von Kreisler, Selting, Werner**
**Deichmannhaus am Hauptbahnhof**
**D-5000 Köln 1(DE)**

(54) **Kabelaufnahmevorrichtung.**

(57) Die Kabelaufnahmevorrichtung (15) weist eine flexible Umhüllung (18) auf, die in einen Kabelkanal (10) eingelegt werden kann und in der das Kabelbündel (27) angeordnet wird. Längs einer Kante (22) ist die Umhüllung (18) mit einer Erdungslitze (25) versehen, und in der Nähe der Erdungslitze ist eine Haftschicht (23) angeordnet, um den anderen Randbereich der Umhüllung darüber zu legen und die Umhüllung somit zu schließen. An der Außenseite befindet sich eine weitere Haftschicht (21), die an der Innenseite des Kabelkanals festgeklebt wird.

FIG.1

EP 0 330 082 A2

## Kabelaufnahmevorrichtung

Die Erfindung betrifft eine Kabelaufnahmevorrichtung nach dem Oberbegriff des Patentanspruchs 1.

Es ist bekannt, elektrische Kabel in starren Kabelkanälen zu verlegen, in die diese Kabel hineingelegt oder eingezogen werden. Für viele Anwendungen, insbesondere für die Datenübertragung, ist es erforderlich, Kabel gegen externe Störungen abzuschirmen. HF-geschirmte Kabel, die eine eigene Abschirmung aufweisen sind teuer. Häufig werden nicht-abgeschirmte Kabel in einem gemeinsamen Kabelkanal verlegt.

Bekannt sind ferner flexible Kabelhüllen, an deren Längskanten die Verschlußschienen eines Reißverschlusses angeordnet sind. Solche flexiblen Kabelhüllen können an ihrer Innenseite eine Metallbeschichtung aufweisen, die als HF-Abschirmung wirkt. Nachteilig ist bei solchen vorgefertigten Kabelhüllen, daß für alle Durchmesser des Kabelbündels Hüllen von geeigneter Breite verfügbar gehalten werden müssen. Die Hüllen können nicht auf Maß geschnitten werden, weil dann eine der Reißverschlußschienen abgetrennt würde. Ein weiterer Nachteil solcher Kabelhüllen besteht darin, daß sie von einem Ende her geöffnet werden müssen. Wenn am anderen Ende Zugang zu dem Kabelbündel erwünscht ist, muß der Reißverschluß über seine gesamte Länge aufgezogen werden.

Die bekannten starren Kabelkanäle dienen zur geschützten Unterbringung von Kabeln in Gebäuden, Fahrzeugen, Flugzeugen, Schiffen u. dgl.. Wenn das Kabelbündel oder ein Teil davon den Kabelkanal verläßt, ist es völlig ungeschützt und die einzelnen Kabel des Bündels sind auch nicht gegen Verschiebungen und Verlagerungen gesichert.

Der Erfindung liegt die Aufgabe zugrunde, eine Kabelaufnahmevorrichtung der im Oberbegriff des Patentanspruchs 1 angegebenen Art zu schaffen, in der mehrere Kabel elektrisch abgeschirmt und mechanisch geschützt untergebracht sind.

Die Lösung dieser Aufgabe erfolgt erfindungsgemäß mit den im kennzeichnenden Teil des Patentanspruchs 1 angegebenen Merkmalen.

Nach der Erfindung ist eine flexible Umhüllung vorgesehen, die um das Kabelbündel herumgelegt werden kann, und deren Randbereiche durch eine Haftschicht verbindbar sind. Die flexible Umhüllung weist eine HF-Abschirmung, vorzugsweise in Form einer Metallbeschichtung, auf. Sie hält die im Innern des Kabelkanals verlaufenden Kabel eng umfaßt und schützt diese Kabel gegen externe elektrische oder elektromagnetische Einflüsse. Es besteht in vielen Fällen die Möglichkeit, ungeschirmte Kabel zu verwenden und diese in dem Kabelkanal mit der abschirmenden Umhüllung zu versehen.

Besonders einfach ist die Anbringung der Umhüllung in dem Kabelkanal. Die Umhüllung wird lediglich in den Kabelkanal eingelegt. Dann werden die Kabel eingeführt und schließlich wird die Umhüllung durch übereinanderlegen ihrer Randbereiche geschlossen. Erforderlichenfalls ist die Umhüllung an beliebiger Stelle zugänglich, indem lediglich die Randbereiche an dieser Stelle auseinandergezogen werden. Die Umhüllung kann auch über das Ende des Kabelkanals hinaus mit dem aus dem Kabelkanal herausragenden Kabelbündel mitgeführt werden. Der Kabelkanal muß nicht notwendigerweise geradlinig sein, sondern er kann auch Eckstücke, T-Stücke und Verzweigungsstücke aufweisen.

Mit dem Merkmal des Anspruchs 2 wird die Fixierung der Umhüllung im Kabelkanal erleichtert. Die Umhüllung wird mit der weiteren Haftschicht an einer Wand des Kabelkanals fixiert, so daß sie sich beim Einführen der Kabel und beim Schließen der Umhüllung nicht verschieben kann.

Eine bevorzugte Ausgestaltung der Umhüllung ist im Anspruch 3 angegeben. Hierbei verlaufen eine Erdungslitze und die erste Haftschicht einander benachbart längs der einen Längskante der Umhüllung. Wird die Umhüllung durch Überlappung ihrer Randbereiche geschlossen, dann liegt die Erdungslitze von unten an der HF-Abschirmung der oberen Lasche an. Die Haftschicht befindet sich an der unteren Lasche und hält von dort die obere Lasche fest. Besonders vorteilhaft ist, daß die Umhüllung entsprechend der Weite bzw. dem Innenumfang des verwendeten Kabelkanals vom Benutzer auf Maß geschnitten werden kann, indem von demjenigen Längsrand, der der Erdungslitze abgewand ist, ein entsprechend breiter Streifen abgetrennt wird. Die Funktionsteile, nämlich die Erdungslitze und die erste Haftschicht, verlaufen entlang der einen Längskante, während die andere Längskante von Funktionsteilen frei ist und auf ein beliebiges Maß geschnitten werden kann. Die Umhüllung kann an die Form und Größe des Kabelbündels leicht angepaßt werden. Sie ist einfach und kostengünstig herstellbar und ihre Montage ist ohne Schwierigkeiten auch von ungeübten Kräften durchführbar.

Wenn das Kabelbündel den Kabelkanal nicht vollständig ausfüllt, kann außerhalb der Umhüllung gemäß Anspruch 4 ein Füllmaterial, z.B. ein Schaumstoff, angeordnet werden. Dieses Füllmaterial drückt gegen die aneinander haftenden, sich überlappenden Randbereiche der Umhüllung und trägt damit dazu bei, den Schließzustand der Umhüllung zu sichern.

Die Umhüllung ist in Verbindung mit verschiedenen Arten von Kabelkanälen anwendbar, beispielsweise mit offenen oder durch einen Deckel verschließbaren Kabelkanälen. Vorzugsweise hat der Kabelkanal jedoch einen Klappdeckel und er kann insbesondere aus einem einstückigen Kunststoffprofil bestehen, bei dem der Klappdeckel über ein Filmscharnier mit dem Rumpf des Kabelkanals verbunden ist.

Im folgenden wird unter Bezugnahme auf die Zeichnungen ein Ausführungsbeispiel der Erfindung näher erläutert.

Es zeigen:

Fig. 1 eine perspektivische Darstellung eines geöffneten Kabelkanals mit eingelegter offener Umhüllung,

Fig. 2 eine Darstellung des geschlossenen Kabelkanals, und

Fig. 3 in vergrößertem Maßstab eine Darstellung der Einzelheit 111 aus Fig. 1.

Die dargestellte Aufnahmevorrichtung weist einen langgestreckten Kabelkanal 10 auf, der aus einem einstückigen Profil besteht. Der Rumpf des Kabelkanals 10 weist eine Bodenwand 11, und rechtwinklig davon abstehende Seitenwände 12, 13, auf. Mit der Seitenwand 12 ist über ein Filmscharnier 14 der Deckel 15 verbunden. An der Außenkante des Deckels 15 befindet sich eine Profilleiste 16, die einrastend in eine Aufnahmeleiste 17 am oberen Ende der Seitenwand 13 eingreifen kann.

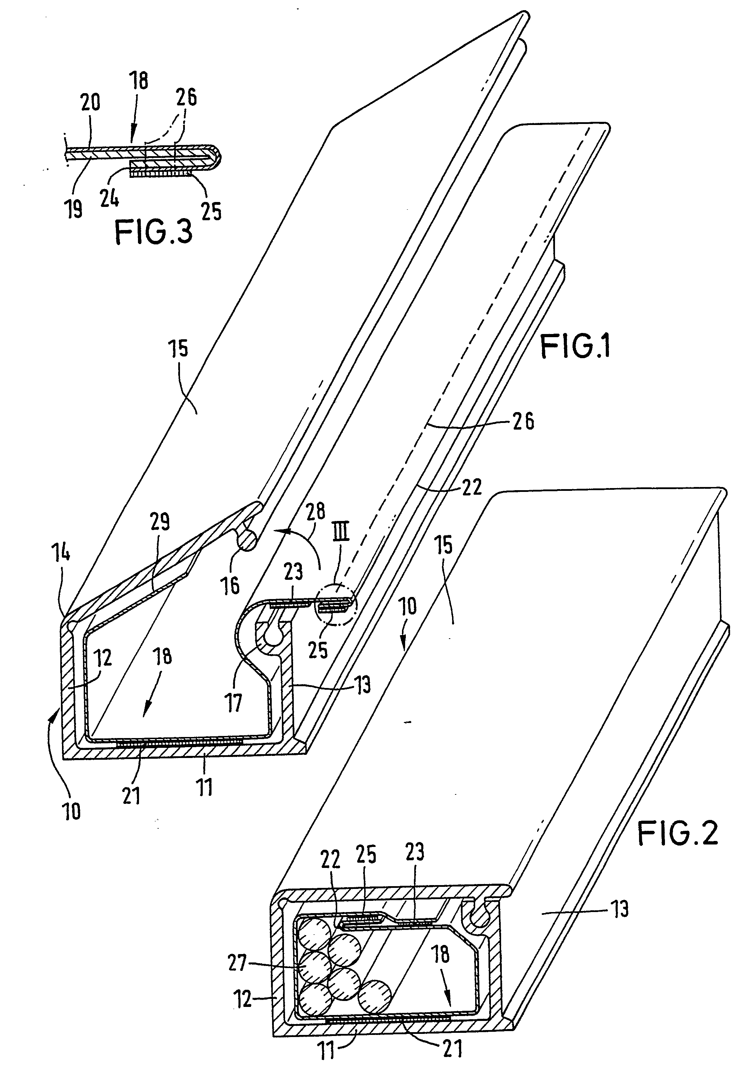

In den Kabelkanal 10 wird gemäß Figur 1 die flexible Umhüllung 18 eingelegt. Bei dieser handelt es sich um einen Folienstreifen 19 aus Kunststofffolie, der an einer Seite mit einer HF-Abschirmung in Form einer Metallbeschichtung 20 versehen ist. Die Metallbeschichtung bildet die Innenseite der Umhüllung. Die Umhüllung 18 ist im Mittelbereich ihrer Breite außen mit einer längslaufenden Haftschicht 21 versehen, die aus einem Doppelklebeband besteht. Die Haftschicht 21 wird gegen den Boden 11 des Kabelkanals 10 geklebt, wobei sich die seitlichen Bereiche der Umhüllung gegen die Seitenwände bzw. den Deckel 15 legen und der eine Rand gemäß Figur 1 über die Seitenwand 13 nach außen geklappt ist. In diesem Zustand können die Kabel in die Umhüllung 18 eingelegt werden.

An der Außenseite der Umhüllung 18 befindet sich in der Nähe der Kante 22 die längslaufende Haftschicht 23 in Form eines Streifens aus Doppelklebeband. An der Kante 22 ist der Rand gemäß Figur 3 umgefaltet, so daß im umgefalteten Randstreifen 24 die HF-Abschirmung 20 nach außen gerichtet ist. Auf die Außenseite des Randstreifens 24, also auf die HF-Abschirmung 20, ist die längslaufende Erdungslitze 25 aus Metalldrahtgeflecht aufgenäht. Die Naht ist in Figur 1 mit 26 bezeichnet.

Nachdem das Kabelbündel 27, das aus losen Kabeln besteht, in die Umhüllung 18 eingelegt worden ist, wird der die Erdungslitze 25 tragende Randbereich in Richtung des Pfeiles 28 von Figur 1 über das Kabelbündel 27 gefaltet, so daß die Erdungslitze 25 und die Haftschicht 23 nach oben gerichtet sind. Dann wird der gegenüberliegende Rand 29 von oben gegen die Haftschicht 23 gedrückt, wodurch er an der Haftschicht anklebt. Durch die unmittelbare Nähe von Haftschicht 23 und Erdungslitze 25 wird erreicht, daß die HF-Abschirmung 20 des Randbereichs 29 fest gegen die Erdungslitze 25 gedrückt gehalten wird.

## Ansprüche

1. Kabelaufnahmevorrichtung mit einem Kabelkanal (10) zur Aufnahme eines Kabelbündels (27), **dadurch gekennzeichnet,** daß eine in den Kabelkanal (10) einlegbare flexible Umhüllung (18) vorgesehen ist, die an ihrer Innenseite eine HF-Abschirmung (20) aufweist und in der Nähe ihrer einen Längskante (22) eine erste Haftschicht (23) trägt.

2. Kabelaufnahmevorrichtung nach Anspruch 1, **dadurch gekennzeichnet,** daß die Umhüllung (18) an ihrer Außenseite eine weitere Haftschicht (21) zur Befestigung am Kabelkanal (10) trägt.

3. Kabelaufnahmevorrichtung nach Anspruch 1 oder 2, **dadurch gekennzeichnet,** daß längs einer Längskante der Umhüllung (18) eine Erdungslitze (25) verläuft, die mit der HF-Abschirmung (20) in leitender Verbindung steht, und daß die erste Haftschicht (23) in der Nähe der Erdungslitze (25) an der Außenseite der Umhüllung (18) angeordnet ist.

4. Kabelaufnahmevorrichtung nach einem der Ansprüche 1 bis 3, **dadurch gekennzeichnet,** daß die Umhüllung (18) das Kabelbündel (27) eng umschließt, und daß der übrige Raum des Kabelkanals (10) mit einem Füllmaterial ausgefüllt ist.

5. Kabelaufnahmevorrichtung nach einem der Ansprüche 1 bis 4, **dadurch gekennzeichnet,** daß der Kabelkanal (10) einen Klappdeckel (15) aufweist, der im Schließzustand verrastbar ist.

6. Kabelaufnahmevorrichtung nach Anspruch 5, **dadurch gekennzeichnet,** daß der Kabelkanal (10) aus einem einstückigen Kunststoffpofil besteht.

FIG.3

FIG.1

FIG.2